# EUROPÄISCHE PATENTSCHRIFT

(11) **EP 1 368 559 B1**
(45) Veröffentlichungstag und Bekanntmachung des Hinweises auf die Patenterteilung: **19.10.2005**
(21) Anmeldenummer: 02722154.8
(22) Anmeldetag: 28.02.2002
(51) Int. Cl.: F01N 3/28, F01N 11/00, F01N 7/00

(54) **VERFAHREN ZUR HERSTELLUNG EINES METALLISCHEN WABENKÖRPERS MIT AUFNAHME FÜR EINEN SENSOR**
METHOD OF PRODUCING A METAL HONEYCOMB BODY WITH A RECEIVER FOR A SENSOR
PROCEDE DE PRODUCTION D'UN CORPS METALLIQUE EN NID D'ABEILLES PRESENTANT UN LOGEMENT POUR UN CAPTEUR

(30) Priorität: 16.03.2001 DE 10112678
(43) Veröffentlichungstag der Anmeldung: 10.12.2003
(73) Patentinhaber: Emitec Gesellschaft für Emissionstechnologie mbH, 53797 Lohmar (DE)
(72) Erfinder: BRÜCK, Rolf, 51429 Bergisch Gladbach (DE)
(74) Vertreter: Herzog, Martin
(86) Internationale Anmeldenummer: PCT/EP2002/002123
(87) Internationale Veröffentlichungsnummer: WO 2002/075125

(56) Entgegenhaltungen:
- DE-A- 19 921 263
- DE-U- 8 816 154
- PATENT ABSTRACTS OF JAPAN vol. 013, no. 183 (M-820), 28. April 1989 (1989-04-28) & JP 01 012018 A (TOYOTA MOTOR CORP), 17. Januar 1989 (1989-01-17)

## Beschreibung

Die vorliegende Erfindung bezieht sich auf ein Verfahren zur Herstellung eines metallischen Wabenkörpers, der zumindest teilweise strukturierte Blechfolien umfasst, wobei Kanäle gebildet sind, die insbesondere für ein Abgas einer Verbrennungskraftmaschine durchströmbar sind. Der metallische Wabenkörper weist mindestens eine sich in das Innere des Wabenkörpers erstreckende Aufnahme für einen Sensor auf

Derartige Wabenkörper mit Sensoren werden insbesondere zur "On-Board-Diagnose" (ODB) eingesetzt, deren Gegenstand die Funktionsüberwachung von katalytischen Konvertern beispielsweise in einem Abgassystem eines Automobils ist. Katalytische Konverter dienen dabei der Umsetzung von in dem Abgas enthaltenen Schadstoffen (wie z.B. Stickoxide, ungesättigte Kohlenwasserstoffe, Kohlenmonoxid) in Bestandteile, die entsprechend den geltenden gesetzlichen Vorgaben in die Umgebung abgegeben werden können. Aufgrund der Tatsache, dass eine direkte Messung von beispielsweise schädlichen Kohlenwasserstoffen mittels eines Sensors heute nicht möglich erscheint, gibt es derzeit zwei Methoden, die zur Überwachung der Funktionalität von katalytischen Konvertern herangezogen werden.

Gegenstand der ersten Methode ist die Bestimmung des im katalytischen Konverter gespeicherten Sauerstoffs. Dazu werden vor und hinter dem katalytischen Konverter jeweils ein Sauerstoffsensor angeordnet, welche den Sauerstoffgehalt im Abgas bestimmen. Daraus können Rückschlüsse über die Speicherkapazität des Katalysators bzw. über den Fortschritt des Alterungsprozesses gewonnen werden.

Die zweite Methode erfasst mit zwei thermischen Sensoren, die direkt vor und hinter dem katalytischen Konverter angeordnet sind, die Temperaturveränderung des Abgases. Diese werden bedingt durch thermische Prozesse im Inneren des katalytischen Konverters, insbesondere exothermen Reaktionen des Katalysators mit dem Abgas.

Neben derartigen Anordnungen von zwei Sensoren vor und hinter einem katalytischen Konverter, geht aus dem deutschen Gebrauchsmuster DE 8816154U ein Trägerkörper für einen katalytischen Reaktor zur Abgasreinigung hervor, dessen Wabenkörper einstückig aus metallischen Wellbändem aufgebaut ist. Dabei ist ein Sensor derart an dem Trägerkörper angeordnet, dass sich dieser in das Innere des Metallwabenkörpers erstreckt. Weiter wird vorgeschlagen, die dafür notwendige Öffnung mittels Elektrobeam- oder Laserschneiden, Senkerosion oder Hochgeschwindigkeitsfräsen und -schleifen herzustellen. Dabei hat sich die Herstellung einer derartigen Öffnung nach der Ausbildung des metallischen Wabenkörpers als fertigungstechnisch schwierig herausgestellt.

Hiervon ausgehend ist es Aufgabe der vorliegenden Erfindung, ein Verfahren zur Herstellung eines metallischen Wabenkörpers anzugeben, mit dem ein sicherer und für die Serienproduktion geeigneter Fertigungsprozess gewährleistet wird.

Diese Aufgabe wird gelöst durch das Verfahren gemäß dem geltenden Anspruch 1. Weitere vorteilhafte Ausgestaltungen des Verfahrens sind in den abhängigen Ansprüchen beschrieben.

Das Verfahren zur Herstellung eines metallischen Wabenkörpers umfassend zumindest teilweise strukturierte Blechfolien, wobei Kanäle gebildet sind, die insbesondere für ein Abgas einer Verbrennungskraftmaschine durchströmbar sind und welcher mindestens eine sich in das Innere des Wabenkörpers erstreckende Aufnahme für einen Sensor hat, weist erfindungsgemäß folgende Schritte auf:
- Herstellen von Ausnehmungen an mindestens einer Blechfolie, wobei die Ausnehmungen bereits vor der fenerierung der Struktur der Blechfolien - hergestellt werden
- Stapeln und/oder Wickeln der Blechfolien zur Formung einer Wabenstruktur, wobei die mindestens eine Blechfolie derart angeordnet ist, dass mindestens eine sich in das Innere erstreckende Aufnahme gebildet ist;
- Einbringen der Blechfolien in ein Mantelrohr mit einer Öffnung, wobei sich die Öffnung zumindest teilweise über die mindestens eine Aufnahme erstreckt;
- Herstellen einer fügetechnischen Verbindung von den Blechfolien miteinander und/oder dem Mantelrohr.

Gemäß des Verfahrens werden die Ausnehmungen bereits vor der Generierung der Struktur der Blechfolien hergestellt. Üblicherweise werden metallische Wabenkörper mit glatten und gewellten Blechfolien aufgebaut. Die gewellten Blechfolien werden mit einem Wälzverfahren in die Blechfolien eingebracht. Im Hinblick auf die Herstellung der Ausnehmungen ist eine vorgelagerte Herstellung vorteilhaft, da relativ einfache Fertigungsverfahren herangezogen werden können. So ist es insbesondere möglich, die Ausnehmungen aus den Blechfolien zu stanzen oder zu nippeln. Somit wird eine Beschädigung der Struktur der Blechfolien verhindert.

Das vorgeschlagene Verfahren zeichnet sich insbesondere dadurch aus, dass bereits vor dem Stapeln und/oder Wickeln der Blechfolien zur Formung einer Wabenstruktur wesentliche Fertigungsprozesse zur Ausbildung der Aufnahme vorgenommen werden. Dies hat zur Folge, dass bei der Herstellung von derartigen Ausnehmungen nur die unmittelbar angrenzenden Bereiche der mindestens einen Blechfolie beansprucht wird. Im Gegensatz dazu führte die Herstellung einer entsprechenden Aufnahme nach den herkömmlich bekannten Verfahren zur Verformung von vielen benachbarten Blechfolien, da diese bereits dicht beieinander angeordnet waren. Eine derartige Verformung führte insbesondere zur Verstopfung von Kanälen, wobei beispielsweise die Effektivität eines katalytischen Konverters oder der Druckverlust negativ beeinträchtigt wurde. Diese Nachteile werden mit dem erfindungsgemäßen vorgeschlagenen Verfahren vermieden, wobei insbesondere die Bearbeitung jeder einzelnen Blechfolie separat bevorzugt wird.
Gemäß einer weiteren Ausgestaltung wird vorgeschlagen, eine Aufnahme in der Form eines Sackloches zu erzeugen. Demnach sind die Ausnehmungen an der mindestens einen Blechfolie so auszuführen, dass diese nach dem Stapeln und/oder Wickeln eine Aufnahme generieren, welche sich von dem Umfang der Wabenstruktur bis in innere Bereiche erstreckt. Die Abmessungen des Sackloches sind dabei so zu wählen, dass das Sackloch nur geringfügig größer ist, als der sich in das Innere des Wabenkörpers erstreckende Sensor. Somit ist sichergestellt, dass trotz der Anordnung eines Sensors im Inneren des Wabenkörpers eine ausreichend große Anzahl von Kanälen mit vollständig geschlossener Wand aufweist, welche die für eine katalytischaktive Umsetzung von Schadstoffen im Abgas notwendige Oberfläche zur Verfügung stellen.

Gemäß einer weiteren Ausgestaltung weist der metallische Wabenkörper Blechfolien mit einer Dicke auf, die kleiner als 0,03 mm ist. Im Hinblick auf derartige dünne Folien ist die nachträgliche Bearbeitung (im gestapelten und/oder gewickelten Zustand) besonders schwierig, so dass das vorgeschlagene Verfahren insbesondere für derartige Blechfolien geeignet ist.

Gemäß noch einer weiteren Ausgestaltung des Verfahrens werden die Blechfolien zunächst gestapelt und anschließend S-förmig verwunden oder so angeordnet, dass die Blechfolien evolventen-fömlig von innen nach außen zum Mantelrohr hin verlaufen. Dabei erfolgt die Herstellung der Ausnehmungen vorzugsweise vor dem Stapeln. Die S-förmige bzw. evolventen-förmige Anordnung der Blechfolien hat zur Folge, dass sich diese jeweils bis zum Rand des Wabenkörpers bzw. bis zum Mantelrohr hin erstrecken. Das hat den Vorteil, dass die Erzeugung einer entsprechenden Aufnahme besonders einfach ist. Dazu ist es ausreichend, eine vorgebbare Anzahl von benachbart angeordneten Blechfolien, in Abhängigkeit von den Dimensionen des Sensors, mit Ausnehmungen zu versehen. Die Ausnehmungen bilden direkt die gewünschte Aufnahme. Im Gegensatz dazu ist bei einer spiralförmigen Anordnung der Blechfolien bei der Herstellung der Ausnehmungen stets die Veränderung des Umfangs zu berücksichtigen, damit die Ausnehmung der aufzuwickelnden Blechlage über der Ausnehmung der vorherigen Blechlage angeordnet ist.

Die Ausnehmungen weisen dabei vorzugsweise eine U-Form auf, wobei insbesondere benachbarte Blechfolien eine unterschiedliche Tiefe aufweisen. Die U-formige Ausgestaltung der Ausnehmungen erlaubt insbesondere die Verwendung von stabförmigen Sensoren. Mit Hilfe vorzugsweise geringer Variationen der Tiefe der Ausnehmungen benachbarter Blechfolien wird die leicht gekrümmte Anordnung der Blechfolien nahe des Mantelrohres berücksichtigt, wobei beispielsweise auch die Integration stabförmiger Sensoren gewährleistet ist, ohne dass diese die Blechfolien kontaktieren.

Gemäß einer vorteilhaften Ausgestaltung des Verfahrens wird die Aufnahme so ausgeführt, dass sie zumindest abschnittsweise einem Verlauf der Blechfolien folgt. Das hat zur Folge, dass nur relativ wenige benachbarte Blechfolien mit Ausnehmungen versehen werden müssen. Dabei ist der einzusetzende Sensor vorzugsweise entsprechend dem Verlauf der Blechfolien angepasst ausgeführt. Dadurch wird eine Beschädigung der Blechfolien verhindert, wobei die Funktionalität der Wabenstruktur nur sehr gering beeinflusst wird.

Weitere vorteilhafte Ausgestaltungen und besonders bevorzugte Ausführungsformen werden anhand der Zeichnungen näher erläutert.

Es zeigen:
- Fig. 1.: Schematisch und perspektivisch einen metallischen Wabenkörper mit einem Sensor,
- Fig. 2.: Schematisch und perspektivisch eine Anordnung von Blechfolien mit Ausnehmungen,
- Fig. 3.: Schematisch und perspektivisch den Ablauf einer Ausgestaltung des erfindungsgemäßen Verfahrens,
- Fig. 4.: Schematisch einen Querschnitt durch eine Ausführungsform eines metallischen Wabenkörpers mit evolventen-förmig verlaufenden Blechfolien und
- Fig. 5.: Schematisch eine Detailansicht einer beschichteten Wabenstruktur.

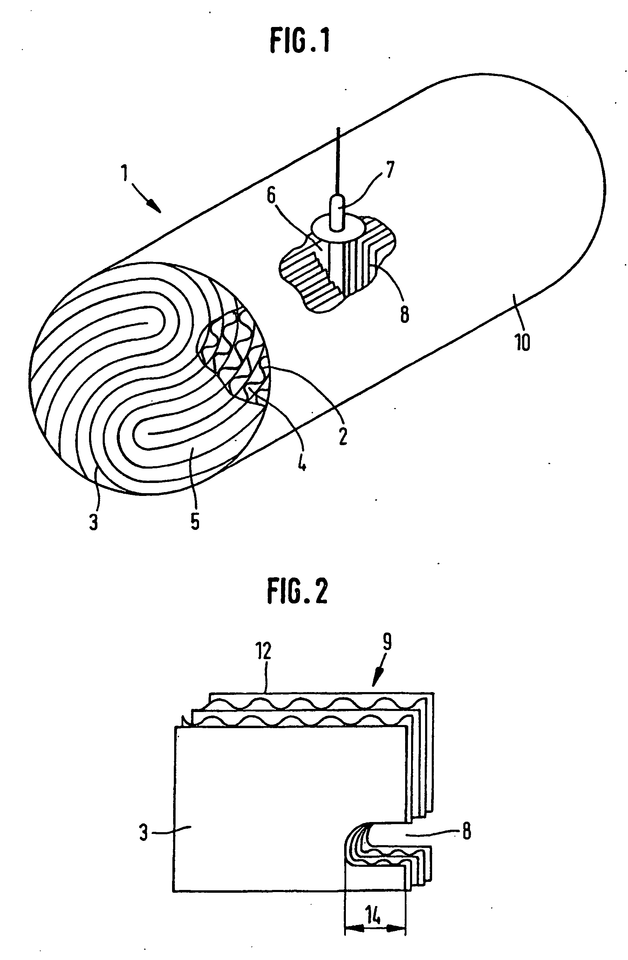

Figur 1 zeigt einen metallischen Wabenkörper 1, der Blechfolien 3 aufweist, die zumindest teilweise mit Strukturen 2 ausgeführt sind, wobei Kanäle 4 gebildet werden. Ein derartiger metallischer Wabenkörper 1 wird insbesondere zur Reinigung von Abgasen einer Verbrennungskraftmaschine eingesetzt, wobei das zu reinigende Abgas durch die Kanäle 4 des Wabenkörpers 1 hindurchströmt. Der Wabenkörper 1 weist eine sich in das Innere 5 des Wabenkörpers 1 erstreckende Aufnahme 6 auf, in dem ein Sensor 7 angeordnet ist. Die Aufnahme 6 wird von einer Anzahl Ausnehmungen 8 gebildet, die in eine entsprechenden Anzahl von Blechfolien 3 eingebracht wurden. Die Blechfolien 3 sind dabei S-förmig gewunden und von einem Mantelrohr 10 umgeben.

Figur 2 zeigt einen Stapel von glatten und gewellten Blechfolien, die zusammen eine Wabenstruktur 9 bilden. Die Blechfolien 3 weisen eine Dicke 12 auf, die vorzugsweise kleiner als 0,03 mm ist. Ein derartiger Stapel wird anschließend beispielsweise S-förmig gewunden. Um dabei beispielsweise eine Aufnahme 6 wie in Figur 1 gezeigt herzustellen, weisen einige Bleche Ausnehmungen 8 auf, die ausgehend von der später am Mantelrohr 10 anliegenden Kante der Blechfolien eine vorgebbare Tiefe 14 aufweisen. Die Tiefe 14 der Ausnehmungen 8 benachbarter Blechfolien 3 ist dabei vorzugsweise unterschiedlich auszuführen. Dabei ist es vorteilhaft, die Blechfolien einzeln mit einem Schneidverfahren zu bearbeiten.

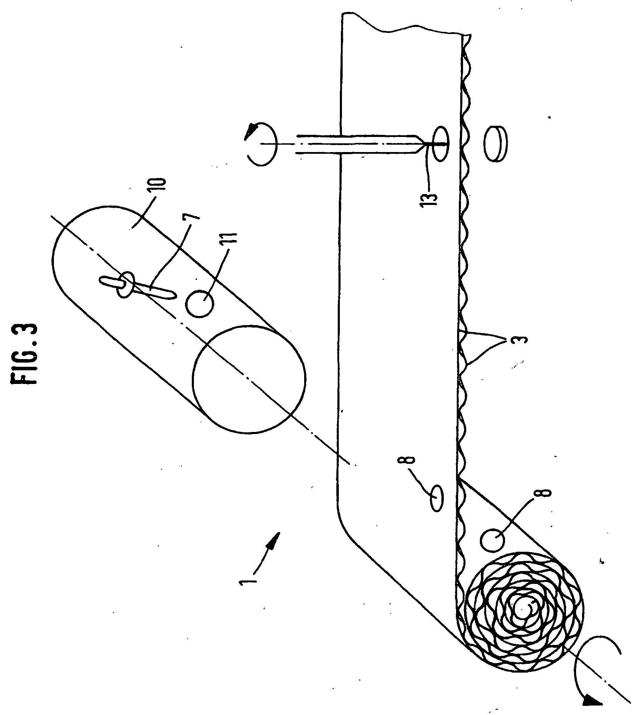

Figur 3 zeigt schematisch den Ablauf zur Herstellung eines metallischen Wabenkörpers 1, dessen Blechfolien 3 spiralförmig aufgewickelt werden. Dabei werden eine glatte und eine strukturierte Blechfolie 3 übereinander gelegt und die Ausnehmungen 8 mit Hilfe eines hochenergetischen Strahles 13 erzeugt. Dabei wird beispielsweise eine Düse entsprechend der gewünschten Form der Ausnehmung 8 über die Blechfolien 3 bewegt (angedeutet durch einen Pfeil), um mit Hilfe des Wasserstrahl-Abrasivstrahlschneidverfahrens beispielsweise runde Ausnehmungen 8 herzustellen. Die so behandelten Blechfolien 3 werden zu einer Wabenstruktur aufgewickelt, wobei die Abstände zwischen den benachbarten Ausnehmungen 8 derart ausgeführt sind, dass sich diese bei dem Aufwickeln stets überlappen. Hat die Wabenstruktur einen vorgegebenen Durchmesser erreicht, werden die zugeführten Blechfolien 3 durchtrennt, und die Wabenstruktur in ein Mantelrohr 10 eingebracht. Das Mantelrohr 10 weist eine Öffnung 11 auf, welche so ausgerichtet wird, dass diese zumindest teilweise über den Ausnehmungen 8 angeordnet ist. So ist eine Aufnahme 6 (nicht dargestellt) gebildet, in die anschließend ein Sensor 7 angeordnet werden kann.

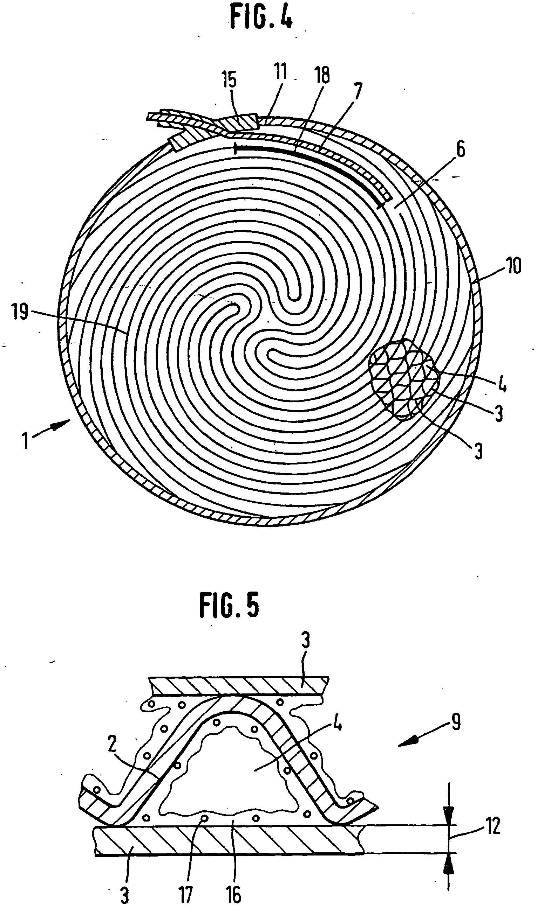

Figur 4 zeigt schematisch einen Querschnitt durch eine Ausführungsform eines metallischen Wabenkörpers 1 mit Blechfolien 3, wobei hier zunächst die Struktur 2 (nicht dargestellt) vernachlässigt wird. Die Blechfolien 3 sind dabei in einem Mantelrohr 10 angeordnet, wobei sich diese einen evolventen-förmigen Verlauf 19 bilden. Die von den Blechfolien 3 gebildete Aufnahme 6 folgt dabei in einem Abschnitt 18 dem Verlauf 19 ebenso wie ein in der Aufnahme 6 angeordneter und entsprechend geformter Sensor 7. Der Sensor 7 ist dabei mittels einer Halterung 15 in der Öffnung 11 des Mantelrohres 10 fixiert. Der Sensor 7 ist zumindest teilweise elastisch bzw. verformbar ausgeführt, um das Einführen des Sensors 7 in die Aufnahme 6 zu erleichtern. Die Anzahl der Blechfolien 3 mit Ausnehmungen 8 (nicht dargestellt) ist auf diese Weise auf weniger als 20, insbesondere weniger 10 begrenzt.

Figur 5 zeigt schematisch eine Detailansicht einer beschichteten Wabenstruktur 9. Die Kanäle 4 der Wabenstruktur 9 werden durch die Blechfolien 3 begrenzt, wobei abwechselnd eine Blechfolie 3 mit einer Struktur 2 und eine glatte Blechfolie 3 verwunden werden. Die Blechfolien weisen hier eine Dicke 12 von weniger als 0,03 mm auf. Die dargestellte Wabenstruktur 9 weist in Hinblick auf den bevorzugten Einsatz derartiger Wabenkörper 1 als Katalysator-Trägerkörper zur Abgasreinigung eine katalytisch aktive Beschichtung 16 auf. Die Beschichtung 16 kommt während des Reinigungsprozesses mit dem die Kanäle 4 durchströmenden Abgas in Kontakt, wobei die Beschichtung 16 enthaltene Edelmetalle 17 eine Umsetzung der Schadstoffe ermöglichen.

Das erfindungsgemäße Verfahren verhindert fertigungstechnische Beschädigungen von Kanälen beim nachträglichen Herstellen von Aufnahmen für Sensoren und gewährleistet somit beispielsweise eine besonders effektive Umsetzung von Abgasen.

### Bezugszeichenliste

- 1: Wabenkörper
- 2: Struktur
- 3: Blechfolie
- 4: Kanal
- 5: innen
- 6: Aufnahme
- 7: Sensor
- 8: Ausnehmung
- 9: Wabenstruktur
- 10: Mantelrohr
- 11: Öffnung
- 12: Dicke
- 13: Strahl
- 14: Tiefe
- 15: Halterung
- 16: Beschichtung
- 17: Edelmetall
- 18: Abschnitt
- 19: Verlauf

## Patentansprüche

1. Verfahren zur Herstellung eines metallischen Wabenkörpers (1) umfassend zumindest teilweise strukturierte (2) Blechfolien (3), wobei Kanäle (4) gebildet sind, die insbesondere für ein Abgas einer Verbrennungskraftmaschine durchströmbar sind, und welcher mindestens eine sich in das Innere (5) des Wabenkörpers (1) erstreckende Aufnahme (6) für einen Sensor (7) aufweist, gemäß folgenden Schritten:
- Herstellen von Ausnehmungen (8) an mindestens einer Blechfolie (3) wobei die Ausnehmungen (8) bereits vor der Generierung der Struktur (2) der Blechfolien (3) hergestellt werden,
- Stapeln und/oder Wickeln der Blechfolien (3) zur Formung einer Wabenstruktur (9), wobei die mindestens eine Blechfolie (3) derart angeordnet ist, dass mindestens eine sich in das Innere (5) erstreckende Aufnahme (6) gebildet ist;
- Einbringen der Blechfolien (3) in ein Mantelrohr (10) mit einer Öffnung (11), wobei sich die Öffnung (11) zumindest teilweise über die mindestens eine Aufnahme (6) erstreckt;
- Herstellen einer fügetechnischen Verbindung von den Blechfolien (3) miteinander und/oder dem Mantelrohr (10).

2. Verfahren nach Anspruch 1, bei dem eine Aufnahme (6) in der Form eines Sackloches erzeugt wird.

3. Verfahren nach Anspruch 1 oder 2, bei dem die Blechfolien (3) eine Dicke (12) haben, die kleiner als 0,03 mm ist.

4. Verfahren nach einem der Ansprüche 1 bis 3, bei dem die Ausnehmungen (8) gestanzt werden.

5. Verfahren nach einem der Ansprüche 1 bis 4, bei dem die Blechfolien (3) zunächst gestapelt und anschließend S-förmig verwunden oder evolventen-förmig von innen (5) nach außen zum Mantelrohr (10) hin verlaufend angeordnet werden.

6. Verfahren nach Anspruch 5, bei dem die Ausnehmungen (8) U-förmig ausgeführt sind.

7. Verfahren nach Anspruch 5 oder 6, bei dem die Ausnehmungen (8) benachbarter Blechfolien (3) eine unterschiedliche Tiefe (14) aufweisen.

8. Verfahren nach einem der Ansprüche 5 bis 7, bei dem die Aufnahme (6) so ausgeführt ist, dass sie zumindest abschnittsweise (18) einem Verlauf (19) der Blechfolien (3) folgt, wobei vorzugsweise anschließend ein entsprechend geformter Sensor (7) eingesetzt wird.

## Claims

1. A process for producing a metallic honeycomb body (1) comprising at least partially structured (2) metal foils (3), with passages (4) being formed, through which in particular an exhaust gas from an internal combustion engine can flow, and which has at least one receptacle (6), which extends into the interior (5) of the honeycomb body (1), for a sensor (7), comprising the following steps:
- producing recesses (8) at at least one metal foil (3), the recesses (8) being produced even before the structure (2) of the metal foils (3) has been generated;
- stacking and/or winding the metal foils (3) in order to form a honeycomb structure (9), the at least one metal foil (3) being arranged in such a manner that at least one receptacle (6) which extends into the interior (5) is formed;
- introducing the metal foils (3) into a jacket tube (10) having an opening (11), the opening (11) extending at least partially over the at least one receptacle (6);
- producing a connection, by a joining technology, between the individual metal foils (3) and/or between the metal foils and the jacket tube (10).

2. The process as claimed in claim 1, in which a receptacle (6) is produced in the form of a blind bore.

3. The process as claimed in claim 1 or 2, in which the metal foils (3) have a thickness (12) of less than 0.03 mm.

4. The process as claimed in one of claims 1 to 3, in which the recesses (8) are stamped.

5. The process as claimed in one of claims 1 to 4, in which the metal foils (3) are initially stacked and are then wound in an S-shape or are arranged so as to run in an involute form from the inside (5) outwards towards the jacket tube (10).

6. The process as claimed in claim 5, in which the recesses (8) are ofU-shaped design.

7. The process as claimed in claim 5 or 6, in which the recesses (8) of adjacent metal foils (3) have different depths (14).

8. The process as claimed in one of claims 5 to 7, in which the receptacle (6) is designed in such a way that, at least in sections (18), it follows a profile (19) of the metal foils (3), in which case a correspondingly shaped sensor (7) is preferably then inserted.

## Revendications

1. Procédé pour la fabrication d'un corps en nids d'abeilles métallique (1) comprenant des feuilles de tôle (3) au moins partiellement structurées (2), des canaux (4) étant formés à travers lesquels en particulier un gaz d'échappement d'une machine à combustion interne peut s'écouler, et qui a au moins un logement (6) s'étendant dans l'intérieur (5) du corps en nids d'abeilles (1), pour un capteur (7), procédé comprenant les étapes suivantes :
- fabrication de dégagements (8) sur au moins une feuille de tôle (3), les dégagements (8) étant fabriqués déjà avant la génération de la structure (2) des feuilles de tôle (3) ;
- empilement et/ou enroulement des feuilles de tôle (3) pour former une structure en nids d'abeilles (9), l'au moins une feuille de tôle (3) étant agencée de manière telle qu'au moins un logement (6) est formé qui s'étend dans l'intérieur (5) ;
- introduction des feuilles de tôle (3) dans un tube d'enveloppe (10) avec une ouverture (11), l'ouverture(11) s'étendant au moins partiellement sur l'au moins un logement (6) ;
- fabrication d'une liaison par technique de jointoiement des feuilles de tôle (3) entre-elles et/ou entre les feuilles de tôle et le tube d'enveloppe (10).

2. Procédé selon la revendication 1, dans lequel un logement (6) est produit qui a la forme d'un trou aveugle.

3. Procédé selon la revendication 1 ou 2, dans lequel les feuilles de tôle (3) ont une épaisseur (12) qui est inférieure à 0,03 mm.

4. Procédé selon l'une des revendications 1 à 3, dans lequel les dégagements (8) sont estampés.

5. Procédé selon l'une des revendications 1 à 4, dans lequel les feuilles de tôle (3) sont d'abord empilées et ensuite entrelacées en forme de S ou sont agencées de manière à s'étendre en forme de développante depuis l'intérieur (5) vers l'extérieur, vers le tube d'enveloppe (10).

6. Procédé selon la revendication 5, dans lequel les dégagements (8) sont réalisés en forme de U.

7. Procédé selon la revendication 5 ou 6, dans lequel les dégagements (8) de feuilles de tôle adjacentes (3) ont une profondeur (14) différente.

8. Procédé selon l'une des revendications 5 à 7, dans lequel le logement (6) est réalisé de manière telle qu'il suit au moins en sections (18) un cours (19) des feuilles de tôle (3), dans quel cas ensuite un capteur (7) formé de façon correspondante est introduit de préférence.
